# EUROPÄISCHE PATENTSCHRIFT

(11) **EP 1 700 885 B1**
(45) Veröffentlichungstag und Bekanntmachung des Hinweises auf die Patenterteilung: **27.08.2008**
(21) Anmeldenummer: 06002171.4
(22) Anmeldetag: 02.02.2006
(51) Int. Cl.: C08K 5/5465

(54) **Härter für Siliconkautschukmassen**
Hardener for silicone rubber compositions
Durcissant pour les compositions de caoutchouc silicone

(30) Priorität: 08.03.2005 DE 102005010669
(43) Veröffentlichungstag der Anmeldung: 13.09.2006
(73) Patentinhaber: Nitrochemie Aschau GmbH, 84544 Aschau (DE)
(72) Erfinder: Pichl, Ulrich, 84544 Aschau (DE); Schmidt, Gerhard, Dr., 84453 Mühldorf (DE); Waldmann, Ludwig, Dr., 84453 Mühldorf (DE)
(74) Vertreter: Lieck, Hans-Peter

(56) Entgegenhaltungen:
- DE-A1- 19 711 520
- DATABASE CAPLUS [Online] CHEMICAL ABSTRACTS SERVICE, COLUMBUS, OHIO, US; SEVERNYI, V. V. ET AL: "Effect of the structure of organosilyloxime crosslinking agents on the hardening rate of siloxane rubbers and physicomechanical properties of vulcanizate rubbers" XP002373865 gefunden im STN Database accession no. 1977:74079 & KAUCHUK I REZINA , (12), 9-11 CODEN: KCRZAE; ISSN: 0022-9466, 1976,
- DATABASE CAPLUS [Online] CHEMICAL ABSTRACTS SERVICE, COLUMBUS, OHIO, US; SEMENKOVA, NATALYA YUREVNA ET AL: "Composition and method for producing a silicone elastomer curable at room temperature" XP002373866 gefunden im STN Database accession no. 2000:457153 -& WO 00/39220 A1 (OBSHCHESTVENNOE OB'EDINENIE "EVRAZIISKOE FIZICHESKOE OBSHCHESTVO", RUS) 6. Juli 2000 (2000-07-06)
- DATABASE CAPLUS [Online] CHEMICAL ABSTRACTS SERVICE, COLUMBUS, OHIO, US; WADA, TADASHI ET AL: "Organosilanes" XP002373867 gefunden im STN Database accession no. 1975:579292 -& JP 49 039967 A (SHIN-ETSU CHEMICAL INDUSTRY CO., LTD.) 30. Oktober 1974 (1974-10-30)

## Beschreibung

Kalthärtende Siliconkautschukmassen, auch RTV-(Raumtemperaturvernetzende)-Siliconkautschukmassen genannt, sind schon lange als maßgeschneiderte Werkstoffe mit elastischen Eigenschaften bekannt. Sie werden u.a. im Bauwesen und im Sanitärbereich als Fugen- oder Dichtungsmassen eingesetzt, weiter als Beschichtungsmaterialien und allgemein als Dichtungsmassen für Glas, Porzellan, Keramik, Stein, Kunststoffe, Metalle, Holz usw. (Römpp Chemie Lexikon, CD ROM, Version 2.0, Hrsg. J.Falbe, Thieme-Verlag, Stuttgart 1999 sowie Ullmanns Enzyklopädie der Technischen Chemie, 4. Auflage, Hrsg. E. Bartholome, Verlag Chemie, Weinheim 1982, Band 21, S. 511 ff.). Insbesondere werden Einkomponenten-RTV-Siliconkautschukmassen (RTV-1) eingesetzt; dabei handelt es sich beispielsweise um plastisch formbare Mischungen aus α,ω-Dihydroxypolyorganosiloxanen und geeigneten Härtern bzw. Vernetzungsmitteln, die unter Feuchtigkeitsausschluß aufbewahrt werden können, aber unter dem Einfluß von Wasser oder Luftfeuchtigkeit bei Raumtemperatur polymerisieren.

In Abhängigkeit von der gewünschten Polymerisationsgeschwindigkeit und den gewünschten chemischen und physikalischen Eigenschaften des Polymerisationsproduktes, wie z.B. dem gewünschten Vernetzungsgrad, der Lösemittelresistenz usw., werden verschiedene tetra- und/oder tri-funktionelle Härter zusammen mit verschiedenen difunktionellen oder mehrere funktionelle Gruppen tragenden Polyorganosiloxane verwendet. Dabei werden besonders häufig α,ω-Dihydroxypolyorganosiloxane als difunktionelle Polyorganosiloxane eingesetzt. Die Polymerisation erfolgt in der Regel durch die Kondensation von SiOH-Gruppen, die intermediär durch die Hydrolyse von geeigneten hydrolysierbaren SiX-Gruppen der Härter gebildet werden. Anhand der bei der Hydrolyse freigesetzten Austrittsgruppen (HX) wird bei RTV-1-Siliconkautschukmassen unterschieden zwischen sauren (HX = Säuren, wie z.B. Essigsäure), basischen (z.B. HX = Amine) und neutralen (z.B. HX = Alkohol oder Oxim) Systemen. Da sowohl saure als auch basische RTV-1-Kautschukmassen bei der Vernetzung aggressive Verbindungen freisetzen, die z.B. Metalle, Stein oder Mörtel korrodieren oder zersetzen, werden für moderne RTV-1-Siliconkautschukmassen häufig Oximosilan-Härter verwendet, die unter Abgabe eines Alkanonoxims hydrolysieren. Besonders Härter, die unter Abgabe von Butan-2-onoxim (bzw. Methyl-Ethyl-Ketoxim, MEKO) hydrolysieren, werden vielfach verwendet. Jedoch kann Butan-2-onoxim nach jüngeren Erkenntnissen Krebs erzeugen und Siliconkautschukmassen, die freies Butan-2-onoxim in einer bestimmte Grenzwerte überschreitenden Konzentration enthalten, unterliegen deshalb einer entsprechenden Kennzeichnungspflicht; vom gesundheitlichen Standpunkt ist die weitere Verwendung Butan-2-onoxim-abgebender Verbindungen grundsätzlich abzulehnen.

Praktisch alle der genannten Härter haben den weiteren, auch gesundheitlichen Nachteil, daß die bei der Vernetzung freigesetzten Verbindungen übel, teilweise sehr übel riechen, was insbesondere bei der Verarbeitung in geschlossenen Räumen eine große Belästigung bedeutet.

Für das Konfektionieren der Siliconkautschukmasse ist es wichtig, daß der Härter bei Raumtemperatur und am besten auch bei noch deutlich tieferen Temperaturen flüssig ist, damit sich der Härter einfach und zuverlässig handhaben und homogen mit der eigentlichen Siliconkautschukmasse vermischen läßt. Bleibt der Härter auch nach einem Transport im Winter bei Minustemperaturen flüssig, erspart das beim Konfektionieren das zeit- und energieaufwendige Aufschmelzen.

Schließlich sollte das Polymerisationsprodukt nach Härtung der Siliconkautschukmasse transparent bzw. klar sein.

Es ist eine Aufgabe der Erfindung, einen verbesserten Härter für Siliconkautschukmassen bereitzustellen, bei dem die dem Stand der Technik eigenen Nachteile beseitigt oder jedenfalls reduziert sind.

Die Aufgabe der Erfindung wird durch den Gegenstand der unabhängigen Ansprüche gelöst. Bevorzugte Ausführungsformen sind Gegenstand der abhängigen Ansprüche.

Gegenstand der Erfindung ist somit ein verbesserter Härter für Siliconkautschukmassen, eine den Härter enthaltende Zusammensetzung, und die Verwendung derselben.

Insbesondere ein Härter, der Propan-2-on-0,0'-(methoxyvinylsilandiyl)dioxim (Formel 1) enthält.

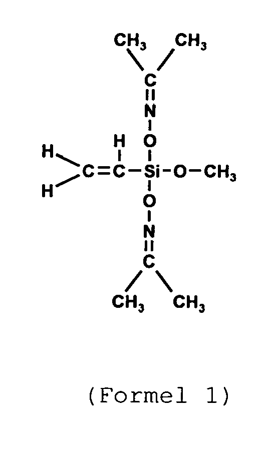

Dieser Härter oder Vernetzer für Silikonkautschukmassen ist in der Lage, in Gegenwart von Wasser oder Luftfeuchtigkeit mit di- oder mehr-funktionellen Polyorganosiloxanverbindungen unter Ausbildung von Si-O-Si-Bindungen zu polymerisieren bzw. zu kondensieren. Bevorzugt werden dabei α,ω-Dihydroxypolyorganosiloxane als difunktionelle Polyorganosiloxanverbindungen verwendet. Somit bedeutet im vorliegenden Zusammenhang eine Siliconkautschukmasse bevorzugt eine Zusammensetzung, die den Härter und di- oder mehr-funktionelle Polyorganosiloxanverbindungen umfaßt.

Überraschend wurde gefunden, daß der Härter eine verbesserte Wirkung beim Härten von Siliconkautschukmassen in Gegenwart von Wasser oder Luftfeuchtigkeit bei Raumtemperatur hat. Insbesondere hat er den Vorteil, daß er bei Hydrolyse Propan-2-onoxim abgibt. Im Gegensatz zu Härtern, die Butanonoxim abgeben, unterliegen deshalb die mit ihm hergestellten Siliconkautschukmassen keiner Pflicht zur Kennzeichnung als potentiell Krebs erzeugend, ja noch nicht einmal als gesundheitsschädlich oder reizend. Auch ist Propan-2-onoxim weder korrosiv noch aggressiv gegenüber Werkstoffen wie Metallen, Mörtel oder Stein (Mamor usw.). Es hat außerdem, im Gegensatz zu allen gebräuchlichen Oximen, einen angenehmen Geruch.

Der Härter ist bis -20°C flüssig und deshalb bequem zu verarbeiten.

Die Polymerisationsprodukte, die unter Verwendung des Härters hergestellt werden, sind überraschenderweise stippenfrei und auf der Oberfläche bilden sich keine Kristalle, obwohl die Austrittsgruppe ein Feststoff ( m.p. 65-68°C ) ist. Schließlich sind die Polymerisationsprodukte transparent und klar.

Der erfindungsgemäße Härter enthält Propan-2-on-O,O'-(methoxyvinylsilandiyl)dioxim (Formel 1) 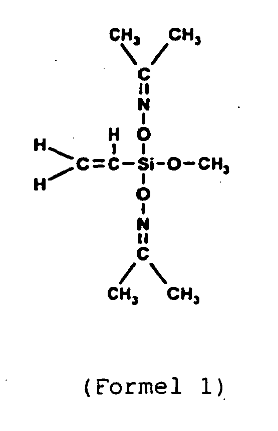 und zusätzlich mindestens eine Verbindung, die aus Propan-2-on-O,O',O"-(vinylsilantriyl)trioxim (Formel 2) und Propan-2-on-O-(dimethoxyvinylsilyl)oxim (Formel 3) ausgewählt wird.

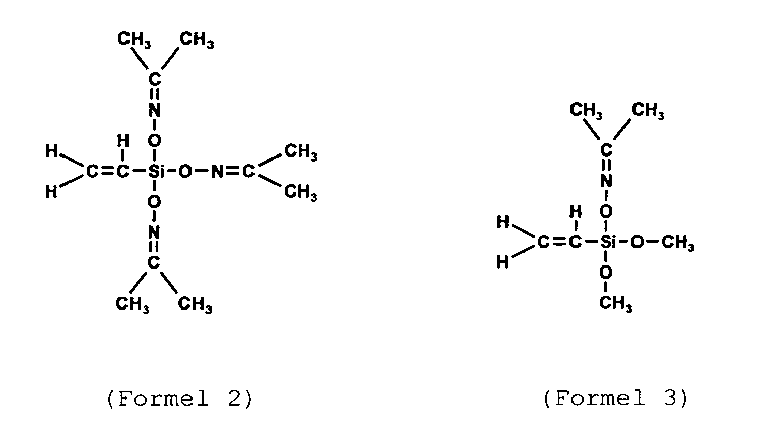

Mit dem erfindungsgemäßen Härter, der neben Propan-2-on-O,O'-(methoxyvinylsilandiyl)dioxim auch Propan-2-on-O,O',O"-(vinylsilantriyl)trioxim und/oder Propan-2-on-O-(dimethoxyvinylsilyl)oxim enthält, wird eine weiter verbesserte Wirkung beim Härten von Siliconkautschukmassen in Gegenwart von Wasser oder Luftfeuchtigkeit erzielt. Er hat alle vorgenannten positiven Eigenschaften einschließlich der, daß er bei der Hydrolyse nur Propan-2-onoxim freisetzt. Darüber hinaus besteht aber die Möglichkeit einer Feineinstellung seiner Eigenschaften beim Aushärten (Hautbildungszeit, Klebefreizeit, Frühbeanspruchung etc.) durch entsprechende Wahl der prozentualen Anteile seiner Komponenten.

In diesem Sinne bevorzugt enthält der Härter Propan-2-on-0,0'-(methoxyvinylsilandiyl)dioxim in einem Anteil von 20 bis 80 Gew.-%, weiter bevorzugt 45 bis 70 Gew.-%, noch weiter bevorzugt 50 bis 60 Gew.-% und besonders bevorzugt 50 bis 55 Gew.-%. Vorzugsweise enthält der Härter daneben Propan-2-on-O,O',O"-(vinylsilantriyl)trioxim in einem Anteil von 1 bis 40 Gew.-%, weiter bevorzugt 7 bis 27 Gew.-% und besonders bevorzugt 15 bis 20 Gew.-%. Vorzugsweise enthält der Härter außerdem Propan-2-on-O-(dimethoxyvinylsilyl)oxim in einem Anteil von 1 bis 40 Gew.-%, weiter bevorzugt 7 bis 27 Gew.-% und besonders bevorzugt 15 bis 20 Gew.-% Propan-2-on-O-(dimethoxyvinylsilyl)oxim. Der Härter kann daneben auch weitere vernetzungsfähige Verbindungen auf Basis von Propan-2-on-O-alkoxyalkenylsilyloxim(en) bzw. Propan-2-on-O-alkoxyalkylsilyloxim(en) umfassen.

Eine erfindungsgemäße Zusammensetzung enthält den oben beschriebenen erfindungsgemäßen Härter und zumindest eine Organosiliconverbindung, vorzugsweise den oben beschriebenen erfindungsgemäßen Härter und zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein α,ω-dihydroxyl-terminiertes Polyorganosiloxan. Ganz besonders bevorzugt sind α,ω-dihydroxyl-terminierte Polydiorganosiloxane, insbesondere α,ω-dihydroxyl-terminierte Polydialkylsiloxane, α,ω-dihydroxyl-terminierte Polydialkenylsiloxane oder α,ω-dihydroxyl-terminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliziumatom, als auch Copolymere aus Monomeren mit verschiedenen organischen Substituenten an einem Siliziumatom umfaßt sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder α,ω-dihydroxyl-terminierte Polydiorganosiloxane mit durch Hydroxyl- und/oder Aminogruppensubstituierten organischen Substituenten an den Siliziumatomen.

Besonders bevorzugte Beispiele für eine Organosiliconverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt.

Es können auch Mischungen aus Polydiorganosiloxanen mit unterschiedlichen Viskositäten verwendet werden.

Falls gewünscht, kann die erfindungsgemäße Zusammensetzung weitere übliche Zusätze enthalten. Übliche Zusätze sind Füllstoffe, Farbmittel, Weichmacher, Thixotrophierungsmittel, Benetzungsmittel, Haftmittel, Katalysatoren und andere. Als Füllstoffe können sowohl verstärkende als auch nicht-verstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Füllstoffe wie hochdisperse Kieselsäuren, insbesondere pyrogene Kieselsäuren, können auch als Thixotrophierungsmittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden. Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt.

Beispiele für Weichmacher umfassen Polydimethylsiloxane mit einer Viskosität von 90 bis 120 cSt., insbesondere von 100 cSt., Paraffinöle und polysubstituierte Alkylbenzole.

Als Benetzungs- und/oder Haftmittel werden bevorzugt an sich bekannte Silanverbindungen mit reaktive Gruppen tragenden organischen Substituenten am Siliziumatom verwendet, die sich von den erfindungsgemäß verwendeten Organosiliconverbindungen unterscheiden, wie z.B. Organosilane mit reaktiven Amin-, Carbonsäure-, Epoxy- oder Thiolgruppen. Besonders bevorzugte Beispiele umfassen Aminosilane, wie Aminoethyl-aminopropyl-trimethoxysilan. Es können metallorganische Katalysatoren verwendet werden, wie sie üblicherweise für kondensationsvernetzende Polysiloxane eingesetzt werden. Bevorzugte Katalysatoren sind zinnorganische Verbindungen, wie Dibutylzinndilaurat, Dibutylzinndiacetat oder Zinn(II)octoat. Titan-, Zirkonium- oder Aluminium-basierte Verbindungen können ebenfalls als Katalysatoren verwendet werden.

Es wurde gefunden, daß die Zusammensetzung unter Feuchtigkeitsausschluß über Zeitspannen von mehr als 12 Monaten aufbewahrt werden kann und unter dem Einfluß von Wasser oder Luftfeuchtigkeit bei Raumtemperatur polymerisiert.

Weiterhin ist vorteilhaft, daß die Zusammensetzung beim Härten zu einer Siliconkautschukmasse nur Propan-2-onoxim abgibt, welcher im Gegensatz zu Butan-2-onoxim gesundheitlich unbedenklich erscheint, weder korrosiv noch aggressiv gegenüber Werkstoffen wie Metallen, Mörtel oder Stein (Marmor usw.) ist und einen angenehmen Geruch hat. Die ausgehärtete Masse ist überraschenderweise ohne Stippen und frei von Kristallen. Außerdem ist sie transparent bzw. klar.

Bevorzugt enthält die erfindungsgemäße Zusammensetzung 40 bis 99 Gew.-% der Organosiliconverbindung und 1 bis 60 Gew.-% des erfindungsgemäßen Härters. Weiter bevorzugt enthält die Zusammensetzung 50 bis 70 Gew.-% der Organosiliconverbindung und 1 bis 10 Gew.-% des erfindungsgemäßen Härters, und besonders bevorzugt 50 bis 60 Gew.-% der Organosiliconverbindung und 3 bis 5 Gew.-% des erfindungsgemäßen Härters, wobei der Rest jeweils durch übliche Zusätze ausgemacht wird.

Ebenfalls ist Gegenstand der Erfindung eine Verwendung der erfindungsgemäßen Zusammensetzung als Dichtungsmittel, Klebstoff oder Beschichtungsmittel. Die Zusammensetzung wird bevorzugt im Bauwesen als Dichtungsmittel oder als Klebstoff eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

### Referenz-Beispiel 1

Es wird eine Siliconkautschukmischung als Dichtstoff gemäß folgender Formulierung hergestellt:

| | |
|---|---|
| 47 g | Härter, nämlich Propan-2-on-0,0'-(methoxyvinylsilandiyl)dioxim mit einem Gehalt > 92% sowie Di- und Trimere davon ad 100% |
| 520,8 g | α,ω-hydroxyl-terminiertes Polydimethylsiloxan mit einer Viskosität von 80.000 cSt |
| 219 g | Polydimethylsiloxan mit einer Viskosität von 100 cSt |
| 108 g | Hochdisperse Kieselsäure |
| 100 g | Hydrosil G 250H |
| 4 g | Aminoethyl-aminopropyl-trimethoxysilan |
| 1,2 g | Dibutyl-zinn-dilaurat |

Der Dichtstoff hat nach Ausbringung an Luft:
- eine Hautbildungszeit von 7 min
- eine Klebfreizeit von 40 min
- eine Frühbeanspruchung nach 40 min möglich
- eine vollständige Aushärtung nach 24 Stunden
- ein transparentes Aussehen
- einen angenehmen Geruch

### Beispiel 1

Es wird eine Siliconkautschukmischung als Dichtstoff gemäß folgender Formulierung hergestellt:

| | |
|---|---|
| 45g | Härter, nämlich Gemisch aus: 59% Propan-2-on-O,O'-(methoxyvinylsilandiyl)dioxim, 19% Propan-2-on-O,O',O''-(vinylsilantriyl)trioxim und 15% Propan-2-on-O-(dimethoxyvinylsilyl)oxim sowie deren Di- und Trimere ad 100%. |
| 585g | α,ω-hydroxyl-terminiertes Polydimethylsiloxan mit einer Viskosität von 80.000 cSt |
| 260g | Polydimethylsiloxan mit einer Viskosität von 100 cSt |
| 90g | Hochdisperse Kieselsäure |
| 15g | Aminoethyl-aminopropyl-trimethoxysilan |
| 5g | Shellsol 140/160 |
| 0,2g | Dibutyl-zinn-dilaurat |

Der Dichtstoff hat nach Ausbringung an Luft:
- eine Hautbildungszeit von 9 min
- eine Klebfreizeit von 50 min
- eine Frühbeanspruchung nach 50 min möglich
- eine vollständige Aushärtung nach 24 Stunden
- ein transparentes Aussehen
- einen angenehmen Geruch

### Beispiel 2

Es wird eine Siliconkautschukmischung als Dichtstoff gemäß folgender Formulierung hergestellt:

| | |
|---|---|
| 45g | Härter, nämlich Gemisch aus 78% Propan-2-on-O,O'-(methoxyvinylsilandiyl)dioxim, 9% Propan-2-on-O,O',O''-(vinylsilantriyl)trioxim und 5% Propan-2-on-O-(dimethoxyvinylsilyl)oxim sowie deren Di- und Trimere ad 100% |
| 585g | α,ω-hydroxyl-terminiertes Polydimethylsiloxan mit einer Viskosität von 80.000 cSt |
| 260g | Polydimethylsiloxan mit einer Viskosität von 100 cSt |
| 90g | Hochdisperse Kieselsäure |
| 15g | Aminoethyl-aminopropyl-trimethoxysilan |
| 5g | Shellsol 140/160 |
| 0,2g | Dibutyl-zinn-dilaurat |

Der Dichtstoff hat nach Ausbringung an Luft:
- eine Hautbildungszeit von 8 min
- eine Klebfreizeit von 45 min
- eine Frühbeanspruchung nach 50 min möglich
- eine vollständige Aushärtung nach 24 Stunden
- ein transparentes Aussehen
- einen angenehmen Geruch

## Patentansprüche

1. Härter,
**dadurch gekennzeichnet, daß** er Propan-2-on-O,O'-(methoxyvinylsilandiyl)dioxim und
weiterhin mindestens eine Verbindung, ausgewählt aus Propan-2-on-O,O',O" -(vinylsilantriyl)trioxim und Propan-2-on-O-(dimethoxyvinylsilyl)oxim enthält.

2. Härter nach Anspruch 1,
**dadurch gekennzeichnet, daß** er 20 bis 80 Gew.-%, vorzugsweise 50 bis 60 Gew.-% Propan-2-on-O,O'-(methoxyvinylsilandiyl)dioxim enthält.

3. Härter nach Anspruch 1 oder 2,
**dadurch gekennzeichnet, daß** er 1 bis 40 Gew.-%, vorzugsweise 7 bis 33 Gew.-% Propan-2-on-O,O',O " -(vinylsilantriyl)trioxim enthält.

4. Härter nach Anspruch 1, 2, oder 3,
**dadurch gekennzeichnet, daß** er 1 bis 40 Gew.-%, vorzugsweise 7 bis 33 Gew.-% Propan-2-on-O-(dimethoxyvinylsilyl)oxim enthält.

5. Zusammensetzung,
**dadurch gekennzeichnet, daß** sie den Härter nach einem der Ansprüche 1 bis 4 und eine Organosiliconverbindung enthält.

6. Zusammensetzung nach Anspruch 5,
**dadurch gekennzeichnet, daß** die Organosiliconverbindung eine α,ω-dihydroxyl-terminierte Polyorganosiloxanverbindung ist, insbesondere ein α,ω-dihydroxyl-terminiertes Polydialkylsiloxan.

7. Zusammensetzung nach Anspruch 5 oder 6,
**dadurch gekennzeichnet, daß** sie 40 bis 90 Gew.-% der Organosiliconverbindung und 1 bis 10 Gew.-% des Härters nach einem der Ansprüche 1 bis 5 enthält

8. Verwendung einer Zusammensetzung nach einem der Ansprüchen 5, 6, oder 7 als Dichtungsmittel, Klebstoff oder Beschichtungsmittel.

## Claims

1. Hardener, **characterized in that** it contains propan-2-one O,O'-(methoxyvinylsilanediyl)dioxime and furthermore at least one compound selected from propan-2-one O,O',O" -(vinylsilanetriyl)trioxime and propan-2-one O-(dimethoxyvinylsilyl)oxime.

2. Hardener according to Claim 1, **characterized in that** it contains 20 to 80% by weight, preferably 50 to 60% by weight, of propan-2-one O-,O'-(methoxyvinylsilanediyl)dioxime.

3. Hardener according to Claim 1 or 2, **characterized in that** it contains 1 to 40% by weight, preferably 7 to 33% by weight, of propan-2-one O,O',O" - (vinylsilanetriyl)trioxime.

4. Hardener according to Claim 1, 2 or 3, **characterized in that** it contains 1 to 40% by weight, preferably 7 to 33% by weight, of propan-2-one O-(dimethoxyvinylsilyl)oxime.

5. Composition, **characterized in that** it contains the hardener according to any of Claims 1 to 4 and an organosilicone compound.

6. Composition according to Claim 5, **characterized in that** the organosilicone compound is an α,ω-dihydroxyl-terminated polyorganosiloxane compound, in particular an α,ω-dihydroxyl-terminated polydialkylsiloxane.

7. Composition according to Claim 5 or 6, **characterized in that** it contains 40 to 90% by weight of the organosilicone compound and 1 to 10% by weight of the hardener according to any of Claims 1 to 5.

8. Use of a composition according to any of Claims 5, 6 and 7 as a sealant, adhesive or coating material.

## Revendications

1. Durcisseur, **caractérisé en ce qu'**il contient de la dioxime de propan-2-one-O,O' (méthoxyvinylsilandiyle) et additionellement au moins un composé, choisi dans la trioxime de propan-2-one-O,O',O" (vinylsilantriyle) et l'oxime de propan-2-one-O-(diméthoxyvinylsilyle).

2. Durcisseur selon la revendication 1, **caractérisé en ce qu'**il contient de 20 à 80 % en poids, de préférence de 50 à 60 % en poids de dioxime de propan-2-one-O,O' (méthoxyvinylsilandiyle).

3. Durcisseur selon la revendication 1 ou 2, **caractérisé en ce qu'**il contient de 1 à 40 % en poids, de préférence de 7 à 33 % en poids de trioxime de propan-2-one-O,O',O" (vinylsilantriyle).

4. Durcisseur selon la revendication 1, 2 ou 3, **caractérisé en ce qu'**il contient de 1 à 40 % en poids, de préférence de 7 à 33 % en poids d'oxime de propan-2-one-O- (diméthoxyvinylsilyle).

5. Composition,
**caractérisée en ce qu'**elle contient le durcisseur selon l'une quelconque des revendications 1 à 4 et un composé d'organosilicone.

6. Composition selon la revendication 5,
**caractérisée en ce que** le composé d'organosilicone est un composé de polyorganosiloxane α,ω-dihydroxyle terminé, notamment un polydialkylsiloxane α,ω-dihydroxyle terminé.

7. Composition selon la revendication 5 ou 6,
**caractérisée en ce qu'**elle contient de 40 à 90 % en poids du composé d'organosilicone et de 1 à 10 % en poids du durcisseur selon l'une quelconque des revendications 1 à 5.

8. Utilisation d'une composition selon l'une quelconque des revendications 5, 6 ou 7, en tant que matériaux d'étanchéité, que d'adhésifs ou que matériaux de revêtement.
